# EUROPEAN PATENT APPLICATION

(11) **EP 3 182 356 A1**
(43) Date of publication of application: **21.06.2017**
(21) Application number: 15200827.2
(22) Date of filing: 17.12.2015
(51) Int. Cl.: G06Q 20/20, G06Q 20/32, G06Q 20/34, G06Q 20/36

(54) **METHOD AND SYSTEM FOR PROCESSING A CONTACTLESS TRANSACTION**

(71) Applicant: MasterCard International Incorporated, Purchase, NY 10577-2509 (US)
(72) Inventor: FLINTER, Stephen Patrick, Dublin, 6W (IE); MORA, Márcia Sofia Paciência, Dublin, 18 (IE); HYLAND, Ralph, Dublin (IE); FORDE, Geoffrey, Wicklow (IE); RIZZINI, Andrea, Dublin, 7 (IE); CLYNE, Ann Marie, Dublin, 14 (IE); ELDER, Stephen, Dublin (IE)
(74) Representative: Keane, Paul Fachtna

(57) **Abstract**

A method of processing a contactless transaction is described. The method comprises creating a mesh network having a plurality of proximity interface nodes. Each proximity interface node is configured to communicate, wirelessly, with a proximity enabled mobile device. An area is serviced with proximity connectivity by dividing the area into zones and associating each zone with a corresponding one of the proximity interface nodes. The proximity enabled mobile device is interfaced with the proximity interface node that is co-located in the same zone as the proximity enabled mobile device for communicating transaction information associated with an event in that particular zone. The mesh network is interfaced with a payment network for processing the transaction information during a payment transaction.

## Description

### Field of the Invention

The present disclosure relates to a method and system for processing a contactless transaction. More particularly, but not exclusively, the present disclosure relates to a method and system for effecting a payment transaction on a payment network in response to a proximity enabled device communicating with a proximity enabled mesh network.

### Background of the Disclosure

Proximity payment cards (or contactless payment cards) have been developed that allow a consumer's payment account number to be automatically read from the proximity card by radio frequency communication with a "proximity reader" that is typically associated with or incorporated into a point-of-sale (POS) terminal. Proximity payment cards typically include a radio frequency identification (RFID) integrated circuit (IC), often referred to as a "chip", that is embedded within the card body. A suitable antenna is also typically embedded in the card body and is connected to the RFID IC to allow the chip to receive and to transmit data by radio frequency (RF) communication via the antenna. For example, an interrogation signal transmitted by the proximity reader of the POS terminal is received by the antenna within the proximity payment card and used to power up the RFID IC of to initiate a purchase transaction.

MasterCard has established a widely-used standard, known as "PayPass <®>", for interoperability of contactless payment cards and proximity readers. In addition, other types of wireless protocols for the wireless exchange of information have been established, such as Near-Field Communication (NFC), for payment applications.

The capabilities of a proximity payment card (or a contactless payment card) have recently been incorporated into portable or mobile devices, thereby turning such mobile devices into contactless payment devices. Such a contactless payment device typically includes integrated circuitry with the same or similar functionality as the RFID IC of a contactless payment card. The mobile device and/or contactless payment device also conventionally includes a loop antenna that is coupled to the payment-related IC for use in sending and/or receiving messages in connection with a transaction that involves contactless payment. Examples of payment-enabled mobile devices include, but are not limited to, mobile telephones, key fobs, portable digital music players, personal digital assistants (PDAs) and the like.

While contactless payment-enabled mobile devices have reduced the time required to complete transactions, they still require to be in the proximity of a "proximity reader" that is typically associated with or incorporated into a point-of-sale (POS) terminal which may lead to delays while customers are forced to wait until an operator become available to bring the POS terminal to the customer. In a restaurant scenario, for example, this is undesirable for not only the customer but also for restaurateur as it delays the speed at which tables are turned over thereby negatively affecting potential profitability. Furthermore, there is a risk that nefarious individuals would use this time delay as an opportunity to leave the restaurant without paying their bill.

There is therefore a need for a method and system for processing a contactless transaction which addresses at least some of the drawbacks of the prior art.

### Summary of the Invention

According to the present disclosure, there is provided a method of processing a contactless transaction; the method comprising:
creating a mesh network having a plurality of proximity interface nodes; each proximity interface node being configured to communicate, wirelessly, with a proximity enabled mobile device;
servicing an area with proximity connectivity by dividing the area into zones and associating each zone with a corresponding one of the proximity interface nodes;
interfacing the proximity enabled mobile device with the proximity interface node that is co-located in the same zone as the proximity enabled mobile device for communicating transaction information associated with an event in that particular zone;
interfacing the mesh network with a payment network for processing the transaction information during a payment transaction.

In one embodiment, the method includes configuring the proximity enabled mobile device to access a digital wallet when interfacing with the co-located proximity interface node.

In another embodiment, a status of the payment transaction is relayed from the payment network to the mobile device via the mesh network.

In a further embodiment, the method includes providing a display means associated with each proximity interface node. Advantageously, the method further includes projecting visually perceptible information from the display means which creates, for example but not limited to, a hologram in the vicinity of the proximity interface node. Other non-limiting examples of display means may include colour coded light, or a table based or mounted screen or display.

In one embodiment, the method comprises terminating a proximity link between the proximity enabled mobile device and the co-located proximity interface node when the proximity enabled mobile device exits the particular zone.

In another embodiment, the method comprises recording an initial geographical position corresponding to the geographical location of the proximity enabled mobile device when a proximity link between the proximity enabled mobile device and the co-located proximity interface node was initiated.

In a further embodiment, the method comprises recording a final geographical position corresponding to the geographical location of the proximity enabled mobile device when a proximity link between the proximity enabled mobile device and the co-located proximity interface node was terminated.

In another embodiment, the method comprises calculating a tariff based on the recorded initial geographical position and the final geographical position of the proximity enabled mobile device.

In an exemplary embodiment, further comprises recording an initial time stamp corresponding to a start event which is relayed from the proximity enabled mobile device to the co-located proximity interface node as part of the transaction information.

In another embodiment, the method comprises recording a final time stamp corresponding to an end event which is relayed from the proximity enabled mobile device to the co-located proximity interface node as part of the transaction information.

In one embodiment, the method comprises calculating a tariff based on the initial time stamp and the final time stamp.

In a further embodiment, the payment transaction includes the calculated tariff.

The present disclosure also relates to a system for processing a contactless transaction; the system comprising:
a mesh network having a plurality of proximity interface nodes; each proximity interface node being configured to communicate, wirelessly, with a proximity enabled mobile device;
means for servicing an area with proximity connectivity by dividing the area into zones and associating each zone with a corresponding one of the proximity interface nodes;
means for interfacing the proximity enabled mobile device with the proximity interface node that is co-located in the same zone as the proximity enabled mobile device for communicating transaction information associated with an event in that particular zone; and
means for interfacing the mesh network with a payment network for processing the transaction information during a payment transaction.

The present disclosure also relates to a computer-readable medium comprising non-transitory instructions which, when executed, cause one or more processors to carry out a method comprising:
creating a mesh network having a plurality of proximity interface nodes; each proximity interface node being configured to communicate, wirelessly, with a proximity enabled mobile device;
servicing an area with proximity connectivity by dividing the area into zones and associating each zone with a corresponding one of the proximity interface nodes;
interfacing the proximity enabled mobile device with the proximity interface node that is co-located in the same zone as the proximity enabled mobile device for communicating transaction information associated with an event in that particular zone;and
interfacing the mesh network with a payment network for processing the transaction information during a payment transaction.

### Brief Description of the Drawings

Embodiments of the present disclosure will now be described, by way of example only, with reference to the accompanying drawings, in which:
Figure 1 illustrates a block diagram of a system for processing a contactless transaction in accordance with an exemplary embodiment;
Figure 2 is a block diagram of a detail of the system of Figure 1;
Figure 3 is a perspective view of the system of Figure 1 installed in a restaurant environment;
Figure 4 is a block diagram of a detail of the system of Figure 1;
Figure 5 is a perspective view of the system of Figure 1 installed in a transit environment;
Figure 6 is a block diagram of a detail of the system of Figure 5;
Figure 7 is a block diagram of the system of Figure 1 configured to pay for parking;
Figure 8 is a flow chart illustrating exemplary steps for processing a contactless tranaction in accordance with an exemplary embodiment; and
Figure 9 is a block diagram of a proximity enabled mobiled device.

### Detailed Description

Embodiments of the present disclosure will now be described with reference to an exemplary method and system for processing a contactless transaction. It will be understood that the exemplary system is provided to assist in an understanding of the present teaching and is not to be construed as limiting in any fashion. Furthermore, modules or elements that are described with reference to any one figure may be interchanged with those of other figures or other equivalent elements without departing from the spirit of the present teaching.

In description of the embodiments, "contactless transaction" may mean, by way of non-limiting example, any near-field, close-range, proximity or wireless transaction undertaken with a device in the vicinity of a terminal or reader, such as those for devices compliant with ISO/IEG 14443 Standard, ISO/IEG 18000 standard, or the NEC standards to including ISO/IEG 18092/ECMA 340 and ISO/IEG 21481/ECMA 352. A device for such transactions may be further compliant with both the ISO/IEG 14443 Standard and the "PayPass" standards provided by MasterCard International Incorporated. Additionally, a device for such transaction may include by way of example a Bluetooth enabled device. Such a Bluetooth enabled device may or may not have payment enabled technology. For example, the Bluetooth enabled device may be a keyfob or tag which has no payment capability per se, but may be linked to a mobile wallet through a companion app or the like. In this scenario, a unique ID of the Bluetooth device is linked to the wallet, such that when the unique ID is recognised, its associated payment infrastructure can accurately map that ID back to the wallet and hence make the payment. Other contactless devices, such as mobile telecommunication devices enabled with contactless or NEC technology, may also benefit from embodiments of the present disclosure, particularly where the contactless device is of a type that is activated when a radio frequency chip on the device is activated by a magnetic field.

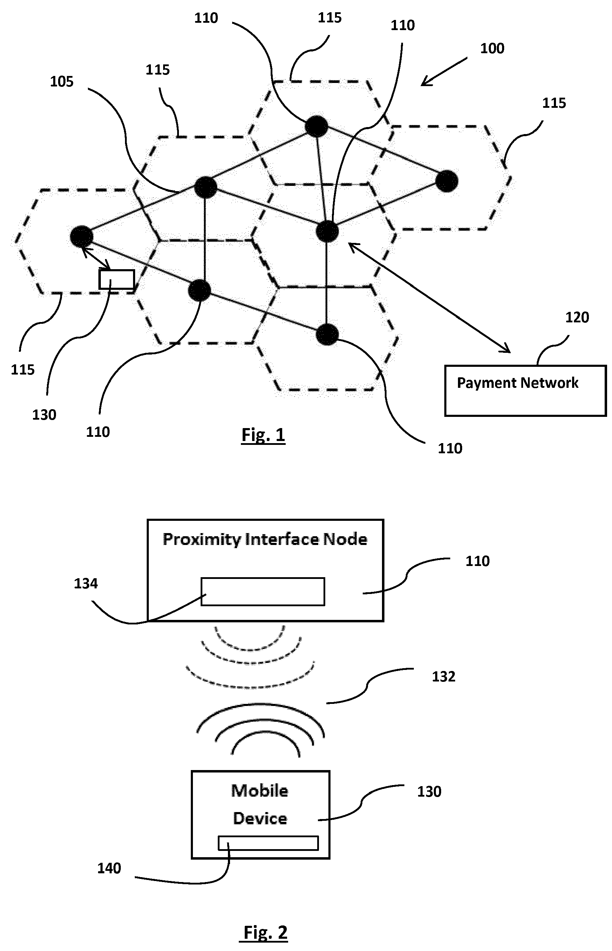

The present subject matter describes various methods, systems, and computer readable media that may be utilized to facilitate the use of a proximity enabled mobile device to pay for goods and/or services without the need to make payment at a point of sale register such that interaction with a checkout operator is unnecessary. Figure 1 is an exemplary system 100 for processing a contactless transaction. The system 100 comprises a mesh network 105 having a plurality of proximity interface nodes 110 which are configured to communicate, wirelessly, with a proximity enabled mobile device 130. The mesh network 105 has a topology in which each proximity interface node 110 is operable to relay data for the network to a neighbouring proximity enabled mobile device 130. The proximity interface nodes cooperate in the distribution of data in the mesh network 105. The proximity enabled mobile device 130, once near enough, can interact 132 with the proximity interface node 110 using any known local interaction method, such as an electromagnetic field generated by the proximity interface node 110 interacting with a receiver on the proximity enabled mobile device 130. The mesh network 105 is a local area network where each proximity interface node 110 is wirelessly connected to one or more other proximity interface nodes 110 and configured to allow data to be routed from node to node. This topology allows data to be rerouted around broken or blocked paths thereby providing a very reliable self-healing network. In the exemplary embodiment, the mesh network 105 is compatible with the CSRmesh protocol which enables Bluetooth devices to receive and process messages but also to repeat thoses messages to surrounding Bluetooth devices. CSRmesh is a protocol layer that runs on top of the Bluetooth standard. A CSRmesh network and other similar mesh networks have two main components, namely, the networking devices to create the proximity interface nodes 110 which allows messages to be transmitted around the network, and a device which can communicate with other Bluetooth enabled sensors and devices. CSRmesh may operate directly with existing bluetooth compatible devices. Advantageously, there is no need for a dedicated hub to connect the proximity interface nodes 110. Encryption may be used for ensuring secure transmission of data throughout the network. It is not intended to limit the present disclosure to a CSRmesh network as alternative mesh networks may also be used as will be understood by those skilled in the art.

The system 100 allows an area to be serviced with proximity connectivity by dividing the area into zones 115 and associating each zone 115 with a corresponding one of the proximity interface nodes 110. The proximity enabled mobile device 130 interfaces with the proximity interface node 110 that is co-located in the same zone 115 as the proximity enabled mobile device 130 for communicating transaction information associated with an event in that particular zone. For example, a zone may be an area around a table in a restaurant; an area defined by one or more carriages of a train, or an area of a parking lot, etc. An event may include for example but not limited to, paying for a meal in a restaurant, paying a transit fare, or paying for parking etc. The mesh network 105 is operable to interface with a payment network 120 for processing the transaction information during a payment transaction.

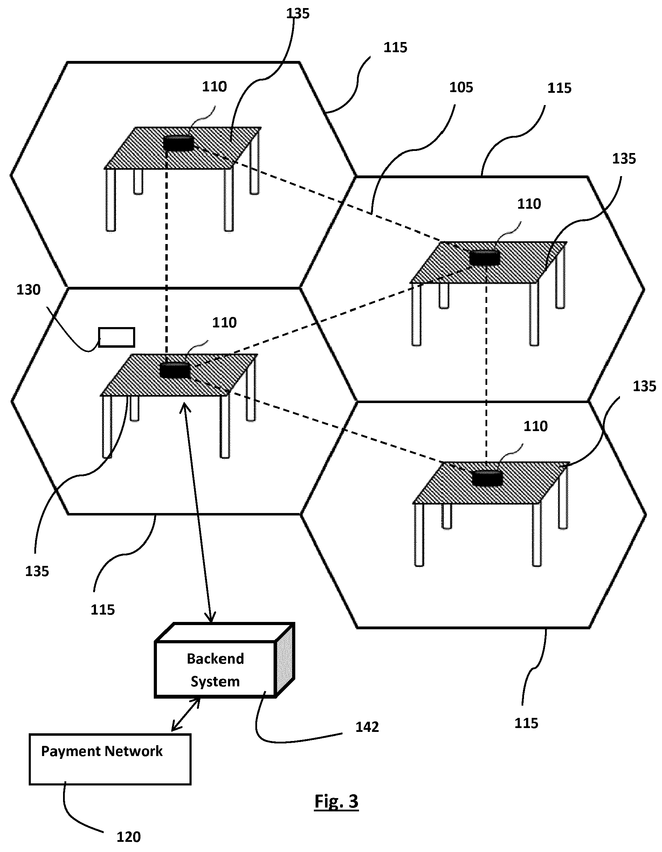

In the exemplary embodiment the processing of a contactless transaction is described with reference to a restaurant environment. However, it is not intended to limit the present teaching to a particular type of environment as other environments are envisaged some of which are described below by way of example. In the restaurant example, the footprint of the restaurant is divided in a plurality of zones 115 as illustrated in Figure 3. Each zone 115 includes a dining table 135 on which meals are served to customers. The mesh network 105 is created by proximity interface nodes 110 which are mounted on each dining table 135. Customers may use their proximity enabled mobile device 110 to pay for their meals using the proximity interface node 110 located at their table. In this way, customers do not have to wait for serving staff to bring them a point-of-sale terminal if they wish to pay for their meal using a credit or debit card. Instead, customers may use their proximity enabled mobile device 130 to initiate a contactless transaction with the proximity interface node 110 located at their table as way of paying the bill. The proximity interface nodes 110 can communicate wirelessly with one or more other proximity interface nodes 110 so that transaction information may be relayed or hopped from a particular table via other tables to a backend system 142. In this way the order and hence the bill is associated with a particular table 135.

The advantages of mesh network approach of the present disclosure is evident when compared to the known payment approach of using a mobile payment app such as the mobile payment app Qkr associated with MasterPass which requires the customer to initially generate a digital code on the mobile app that is subsequently manually entered into the POS at the checkout. The manual entry of the digital code on the POS links the particular customer to their order when the customer checks out. Thus the customer still has to go the checkout or wait for checkout staff to bring a mobile POS to their table in order to pay their bill since the code is required to be manually inputted. In the mesh network approach of Figure 3, the association between the customer and their order is made at the point of interfacing the proximity enabled mobile device 130 with the mesh node 110 on the table 135 that is co-located in the same zone 115 as the proximity enabled mobile device 130. This eliminates the need for the generation of the digital code and it also eliminates the need for the code to be manually entered at the POS. As a consequence, the need for human interaction between the customer and staff is eliminated during a transaction which significantly speeds up the time required to complete the transaction.

Each proximity interface 110 includes a proximity coupling module 134 such as a wireless transceiver for wirelessly communicating with the proximity enabled device 130 via proximity interfacing, and allowing the proximity enabled device 130 to obtain information regarding the order and purchase of various food menu items. The proximity coupling module 134 may include a passive NFC or RF tag unit that is powered by an interfacing NFC enabled device 130. For example, after the NFC enabled device 130 is tapped or brought into close proximity with proximity interface node 110, the proximity coupling module 134 may be activated by obtaining power from the electromagnetic field generated by NFC enabled device 130. Alternatively, the proximity coupling module 134 may include an active RF tag or reader equipped with its own power source. Alternatively, the proximity coupling module 134 may include a Bluetooth device or tag. Whether passive or active, the proximity coupling module 134 is capable of communicating information when the proximity enabled device 130 interfaces with the proximity interface node 110. It will be appreciated by thoses skilled in the art that an actual tap may not be necessary. For example, interfacing may be activated by selecting an option on an app interface rather than tapping the proximity enabled device 130 against a reader. In this way detection may be entirely passive with no tap needed. In the restaurant example, the proximity interface nodes 110 are battery powered so that it is not necessary to have a mains power point at each table 135. The zones 115 may be reconfigured to suit various table arrangements on demand as may be required depending on the number of tables needed to cater for particular functions.

The proximity enabled device 105 may initiate a digital wallet 140 upon interfacing with the proximity interface node 110. The digital wallet application 140 may use a location identifier associated with the proximity interface node 110 in a particular zone 115 to communicate with a back end system 142 of the restaurant in order to obtain a virtual bill detailing the menu items consumed by the customer. The digital wallet 140 may reside in a memory element of the proximity enabled device 130. The digital wallet 140 may be stored in a secure memory element of proximity enabled device 130 or in a non-secure memory without departing from the scope of the present teaching. The digital wallet 140 may include a software application that when executed by a processor in the proximity enabled device 130 manages one ore more softcards stored on the mobile device, such as credit cards, debit cards, and the like. The digital wallet 140 may be configured for paying the virtual bill by triggering a payment transactions on the payment network 120. The digital wallet 140 may communicate a virtual bill identification code and payment credentials to the payment network 120 via the mesh network 105 during the transaction. Alternatively, the digital wallet 140 may be provided on the cloud, with no payment details actually stored on the proximity enabled device 130. In this scenario, an ID of the device such as a Bluethooth ID may be linked with the digital wallet, allowing the merchant to charge the appropriate card/wallet.

The transaction payment processing steps may involve conventional electronic payment infrastructure entities. In a typical transaction, the digital wallet 140 on the proximity enabled mobile devices 130 provides a Primary Account Number (PAN) (or card number) together with other card details (such as a card expiry date, card code verification (CCV) number etc.) to a merchant using the proximity interface node 130 in their vicinity. The transaction processing steps may include tokens such as those used by the MasterCard Digital Enablement Service (MDES). Tokens are card numbers that mobile devices use in place of the card number printed on plastic cards. The merchant transmits the card number and the details using the mesh network 105 to an 'acquirer', i.e. a financial institution that facilitates and processes card payments made to the merchant. The acquirer then transmits an authorisation request via the payment card network to an issuer or payment provider of the card used to make the payment. The payment provider processes the received request and determines whether or not the request is allowable. If the issuer determines that the payment request is allowable, an authorisation response is transmitted via the payment card network to the acquirer and initiates the transfer of the payment amount to the merchant's account. In some instances, authorisation may not happen immediately because the authorisation may take longer than is allowable by the operator. In this case, the authorisation might be batched and processed after the fact. Responsive to receiving the authorisation response from the issuer, the acquirer communicates the authorisation response to the mobile device 130 via the proximity enabled node 130 that the mobile device 130 is in contactless communciation with. The customer may be notified about the status of the transaction via a short messaging service (SMS) message, a multimedia messaging service (MMS) message, a digital receipt, or the like.

A display means such as a projector 144 may be associated with each proximity interface node 110 for projecting visually perceptible information such as particulars of menu items, a virtual bill, or the like. The visually perceptible information may be arranged to provide a hologram 145 around the proximity interface node 110. The menu and/or the virtual bill may be displayed in the hologram 145 as an animated banner or be static. It is not intended to limit the display to a hologram as any suitable display technology may be used as will be appreciated by those skilled in the art.

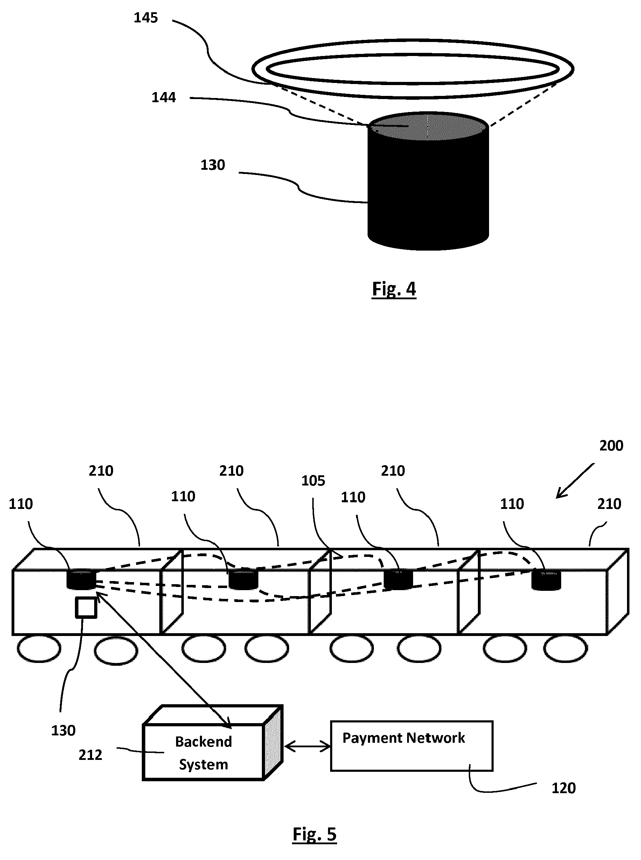

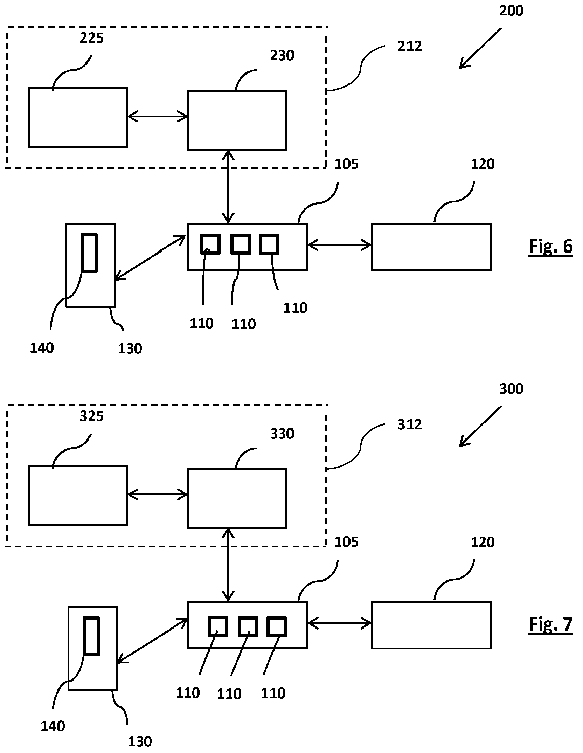

Referring to Figures 5 and 6, there is illustrated another embodiment for processing a transaction which is also in accordance with the present teaching. For convenience like elements are indicated by similar reference numbers. In this exemplary arrangement, the mesh network 105 is configured to provide an automatic fare collection solution for a transit system 200. A commuter seeking access to transit services presents his or her proximity enabled mobile device 130 to the proximity interface node 110 which is installed in the train carriages 210. Each train carriage 210 defines an individual zone which is serviced by one or more proximity interface nodes 130. Alternatively, a zone may include multiple carriages which may be serviced by one or more proximity interface nodes 130. The proximity interface nodes 130 that are installed in the carriages cooperate together to form a mesh network 105 similar to the mesh network of Figure 1 and operate in a similar fashion. In one embodiment, customers may set-up and register pre-funded transit accounts, which are linked to the digital wallet 140 on their proximity enabled mobile device 130. In operation, a customer "passively" presents or "taps" their proximity enabled mobile device 130 at the proximity interface node 110 located on the carriage 210 when they board the train. The proximity enabled mobile device 130 may initiate the digital wallet 140 upon interfacing with the proximity interface node 110. The digital wallet application 140 may use a location identifier associated with the proximity interface node 110 in a particular carriage 210 to communicate with a back end system 212 of the transit system 200 in order to calculate an appropriate fare. The digital wallet 140 may include a software application that when executed by a processor in the proximity enabled device 130 manages one ore more softcards stored on the mobile device, such as credit cards, debit cards, and the like. The digital wallet 140 may be configured for paying the fare by triggering a payment transactions on the payment network 120. The digital wallet 140 may communicate a fare identification code and payment credentials to the payment network 120 via the mesh network 105 during the transaction. Alternatively, a cloud-based ticket may be used rather than a digital wallet 140.

The system 200 is configured to determine when a proximity link between the proximity enabled mobile device 130 and the co-located proximity interface node130 is terminated upon the proximity enabled mobile device 130 exiting the carriage 210. The back end system 212 may include a recording module 225 for recording an initial geographical position corresponding to the geographical location of the proximity enabled mobile device 130 when a proximity link between the proximity enabled mobile device 130 and the co-located proximity interface node 110 was initiated. The geographical position may be calculated using a global positioning system or similar technology which is well known in the art. The recording module 225 may also be operable to record a final geographical position corresponding to the geographical location of the proximity enabled mobile device 130 when a proximity link between the proximity enabled mobile device 130 and the co-located proximity interface node was terminated. A calculation module 230 may be in communication with the recording module 230 and is operable to calculate a fare tariff based on the recorded initial geographical position and the final geographical position of the proximity enabled mobile device 130. The digital wallet 140 may communicate a fare identification code associated with the calculated tariff and payment credentials of the commuter to the payment network 120 via the mesh network 105 so that the fare is automatically collected upon the commuter exiting the train 200. The customer's fare payment may be electronically processed in a manner similar to the present payment-by-card schemes that are used to process PayPass credit or debit card payment transactions.

The system 200 may be used with transit operators that have various payment options, for example, daily/weekly/monthly/annual tickets, commuter tickets, child tickets, pay-as-you-go tickets, etc. In these instances, the system 200 may store a record of the ticket in the cloud and relate the detection of the journey back to the ticket. In an exemplary arrangement, the system 200 may be configured such that passengers never pay more than the lowest fare for the journey(s) that they have taken over a given period of time. This approach is commonly referred to as fare optimisation.

Referring to Figure 7, there is illustrated another embodiment for processing a contactless transaction which is also in accordance with the present teaching. For convenience like elements are indicated by similar reference numbers. In this exemplary arrangement, the mesh network 105 is configured to provide a fare collection solution for a parking system 300. A driver seeking access to a parking lot presents his or her proximity enabled mobile device 130 to the proximity interface node 110 which is installed at an entrances and exits of the parking lot. The proximity interface nodes 130 that are installed in the different zones of the parking lot cooperate together to form a mesh network similar to the mesh network 105 of Figure 1 and operates in a similar fashion. In one embodiment, drivers may set-up and register pre-funded parking accounts, which are linked to the digital wallet 140 on their proximity enabled mobile device 130. In operation, drivers "passviely" presents or "taps" their proximity enabled mobile device 130 at the proximity interface node 110 located in a parking zone as they enter the parking lot. The proximity enabled mobile device 130 may initiate the digital wallet 140 upon interfacing with the proximity interface node 110. The digital wallet application 140 may use a location identifier associated with the proximity interface node 110 in a particular parking zone to communicate with a back end system 312 of the parking system 300 in order to calculate an appropriate parking tariff. The back end system 312 may include a recording module 325 for recording an initial time stamp corresponding to a start event (i.e. the time that the car enters the parking lot) which is relayed from the proximity enabled mobile device 130 to the co-located proximity interface node as part of the transaction information. Furthermore, the recording module 325 may be operable to record a final time stamp corresponding to an end event (i.e. the time that the car exits the parking lot) which is also relayed from the proximity enabled mobile device 130 to the co-located proximity interface node 110 as part of the transaction information. A calculation module 330 may be in communication with the recording module 330 and is operable to calculate a parking tariff based on the recorded initial time stamp and the recorded final time stamp. The digital wallet 140 may communicate a parking tariff identification code associated with the calculated tariff and payment credentials of the driver to the payment network 120 via the mesh network 105 so that the fare is automatically collected upon the driver exiting the parking lot.

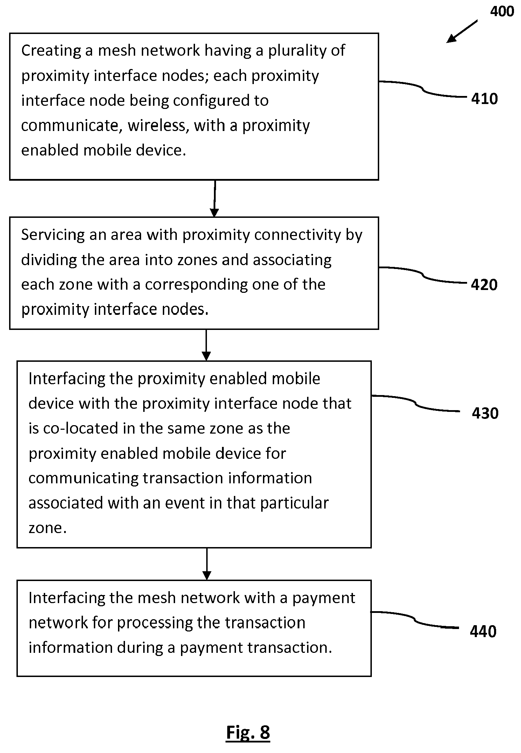

Figure 8 illustrates exemplary steps for processing a contactless transaction in accordance with the present teaching. Step 410, a mesh network is created having a plurality of proximity interface nodes 130; each proximity interface node being configured to communicate, wirelessly, with a proximity enabled mobile device 130. Step 420, an area is serviced with proximity connectivity by dividing the area into zones 115 and associating each zone 115 with a corresponding one of the proximity interface nodes 130. Step 430, the proximity enabled mobile device 130 is interfaced with the proximity interface node 110 that is co-located in the same zone 115 as the proximity enabled mobile device 130 for communicating transaction information associated with an event in that particular zone 115. Step 440, the mesh network 105 is interfaced with a payment network 120 for processing the transaction information during a payment transaction.

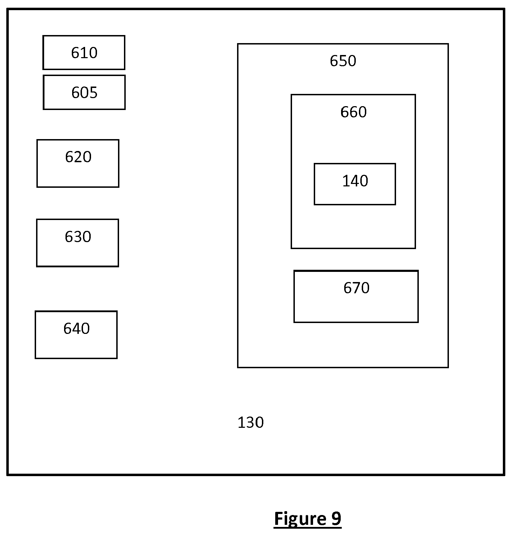

It will be appreciated by those skilled in the art that the proximity enabled mobile device 130 could be a mobile telephone, a tablet, a personal digital assistant (PDA), a bluetoooth enabled device, or the like. For convenience the mobile device 130 has been described as a smart phone but it is not intended to limit the present teaching to smart phones. Figure 9 is a block diagram illustrating a configuration of the proximity enabled mobile device 130 according to an embodiment of the present disclosure. The mobile device 130 includes various hardware and software components that function to perform the methods according to the present disclosure. The mobile device 130 can be used to a carry out a contactless transaction when paying for goods or services. In the exemplary embodiment, the mobile device 130 comprises a near field communication (NFC) module 605, which enables the mobile device 130 to wirelessly communicate with a proximity interface node 110 of the mesh network 105. The mobile device 130 may comprise a user interface 610, a processor 620 in communication with a memory 650, and a communication interface 630. The processor 620 functions to execute software instructions that can be loaded and stored in the memory 650. The processor 620 may include a number of processors, a multi-processor core, or some other type of processor, depending on the particular implementation. The memory 650 may be accessible by the processor 620, thereby enabling the processor 620 to receive and execute instructions stored on the memory 650. The memory 650 may be, for example, a random access memory (RAM) or any other suitable volatile or nonvolatile computer readable storage medium. In addition, the memory 650 may be fixed or removable and may contain one or more components or devices such as a hard drive, a flash memory, a rewritable optical disk, a rewritable magnetic tape, or some combination of the above.

One or more software modules 660 may be encoded in the memory 650. The software modules 660 may comprise one or more software programs or applications having computer program code or a set of instructions configured to be executed by the processor 620. Such computer program code or instructions for carrying out operations for aspects of the systems and methods disclosed herein may be written in any combination of one or more programming languages.

The software modules 620 may include the digital wallet 140 configured to be executed by the processor 120. During execution of the software modules 660, the processor 620 configures the mobile device 130 to perform various operations relating to the facilitating and processing of transactions according to embodiments of the present disclosure, as has been described above. For example, the mobile device 130 may be configured to pay for goods and/or services via a contactless transaction.

Other information and/or data relevant to the operation of the present systems and methods, such as a database 670, may also be stored on the memory 650. The database 670 may contain and/or maintain various data items and elements that are utilized throughout the various operations of the contactless payment system described above. The information stored in the database 670 may include but is not limited to, banking card details. It should be noted that although the database 670 is depicted as being configured locally to the mobile device 130, in certain implementations the database 670 and/or various other data elements stored therein may be located remotely. Such elements may be located on a remote device or server - not shown, and connected to the mobile device 130 through a network in a manner known to those skilled in the art, in order to be loaded into a processor and executed.

Further, the program code of the software modules 660 and one or more computer readable storage devices (such as the memory 650) form a computer program product that may be manufactured and/or distributed in accordance with the present disclosure, as is known to those of skill in the art.

The communication interface 640 is also operatively connected to the processor 620 and may be any proximity interface which facilitates any near-field, close-range, bluetooth compatible, contactless or wireless communication. The user interface 610 is also operatively connected to the processor 620. The user interface may comprise one or more input device(s) such as switch(es), button(s), key(s), and a touchscreen.

The user interface 610 functions to allow the entry of certain information about the user and transaction details as discussed above. The user interface 610 functions to facilitate the capture of commands from the user such as an on-off commands or settings related to operation of the above-described methods. A display 612 may also be operatively connected to the processor 620. The display 612 may include a screen or any other such presentation device that enables the user to view various options, parameters, and results associate with the contactless transaction. The display 612 may be a digital display such as an LED display. The user interface 610 and the display 112 may be integrated into a touch screen display.

The operation of the mobile device 130 and the various elements and components described above will be understood by those skilled in the art with reference to the method and system for processing a contactless transaction according to the present disclosure.

It will be appreciated by those skilled in the art that the advantages of the present teaching are many. In particular but not limited to, the advantages of using a mesh network provides ability to provide a low cost reconfigurable network. The reconfigurable nature of the network makes the network particular suitable to be applied to environments that have a footprint or layout that regularly changes such as in a restaurant where the layout of tables may change from time to time. Similar, the mesh network is suitable for a transit environment where the number of carriages connected to a locomotive may change from time to time. A particular advantage of the present teaching is that a proximity enabled mobile device may be used to pay for goods and/or services without the need to make payment at a point of sale register such that interaction with a checkout operator is unnecessary.

The present disclosure is not limited to the embodiment(s) described herein but can be amended or modified without departing from the scope of the present disclosure. Additionally, it will be appreciated that in embodiments of the present disclosure some of the above-described steps may be omitted and/or performed in an order other than that described.

## Claims

1. A method of processing a contactless transaction; the method comprising:
creating a mesh network (105) having a plurality of proximity interface nodes (110); each proximity interface node (110) being configured to communicate, wirelessly, with a proximity enabled mobile device (130); each proximity interface node (110) being wirelessly connected to one or more other proximity interface nodes (110) and configured to allow data to be routed;
servicing an area with proximity connectivity by dividing the area into zones (115) and associating each zone (115) with a corresponding one of the proximity interface nodes;
interfacing the proximity enabled mobile device (130) with the proximity interface node that is co-located in the same zone as the proximity enabled mobile device (130) for communicating transaction information associated with an event in that particular zone (115); and
interfacing the mesh network (105) with a payment network (120) for processing the transaction information during a payment transaction.

2. A method of claim 1, further comprising configuring the proximity enabled mobile device to access a digital wallet when interfacing with the co-located proximity interface node.

3. A method of claim 1 or 2, wherein a status of the payment transaction is relayed from the payment network (120) to the proximity enabled mobile device (130) via the mesh network (105).

4. A method of any one of the preceding claims, further comprising providing a display means associated with each proximity interface node.

5. A method of claim 4, further comprising projecting visually perceptible information from the display means which creates a hologram in the vicinity of the proximity interface node.

6. A method of any one of the preceding claims, further comprising terminating a proximity link between the proximity enabled mobile device (130) and the co-located proximity interface node when the proximity enabled mobile device exits the particular zone.

7. A method of claim 6; further comprising recording an initial geographical position corresponding to the geographical location of the proximity enabled mobile device when a proximity link between the proximity enabled mobile device (130) and the co-located proximity interface node was initiated.

8. A method of claim 7, further comprising recording a final geographical position corresponding to the geographical location of the proximity enabled mobile device when a proximity link between the proximity enabled mobile device (130) and the co-located proximity interface node was terminated.

9. A method of claim 8, further comprising calculating a tariff based on the recorded initial geographical position and the final geographical position of the proximity enabled mobile device.

10. A method of claim 6, further comprising recording an initial time stamp corresponding to a start event which is relayed from the proximity enabled mobile device to the co-located proximity interface node as part of the transaction information.

11. A method of claim 10, further comprising recording a final time stamp corresponding to an end event which is relayed from the proximity enabled mobile device to the co-located proximity interface node as part of the transaction information.

12. A method of claim 11, further comprising calculating a tariff based on the initial time stamp and the final time stamp.

13. A method of claim 9 or 12, wherein the payment transaction includes the calculated tariff.

14. A system for processing a contactless transaction; the system comprising:
a mesh network (105) having a plurality of proximity interface nodes; each proximity interface node being configured to communicate, wirelessly, with a proximity enabled mobile device; each proximity interface node (110) being wirelessly connected to one or more other proximity interface nodes (110) and configured to allow data to be routed;
means for servicing an area with proximity connectivity by dividing the area into zones and associating each zone with a corresponding one of the proximity interface nodes;
means for interfacing the proximity enabled mobile device (130) with the proximity interface node (110) that is co-located in the same zone (115) as the proximity enabled mobile device (130) for communicating transaction information associated with an event in that particular zone (115); and
means for interfacing the mesh network (105) with a payment network (120) for processing the transaction information during a payment transaction.

15. A computer-readable medium comprising non-transitory instructions which, when executed, cause one or more processors to carry out a method comprising:
creating a mesh network (105) having a plurality of proximity interface nodes; each proximity interface node being configured to communicate, wirelessly, with a proximity enabled mobile device; each proximity interface node (110) being wirelessly connected to one or more other proximity interface nodes (110) and configured to allow data to be routed;
servicing an area with proximity connectivity by dividing the area into zones and associating each zone with a corresponding one of the proximity interface nodes;
interfacing the proximity enabled mobile device (130) with the proximity interface node that is co-located in the same zone as the proximity enabled mobile device (130) for communicating transaction information associated with an event in that particular zone; and
interfacing the mesh network with a payment network for processing the transaction information during a payment transaction.
